# EUROPEAN PATENT SPECIFICATION

(11) **EP 3 188 566 B1**
(45) Date of publication and mention of the grant of the patent: **24.01.2024**
(21) Application number: 16198518.9
(22) Date of filing: 11.11.2016
(51) Int. Cl.: H04W 76/00

(54) **APPLICATION MANAGEMENT METHOD AND DEVICE**
ANWENDUNGSVERWALTUNGSVERFAHREN UND -VORRICHTUNG
PROCÉDÉ ET DISPOSITIF DE GESTION D'APPLICATION

(30) Priority: 28.12.2015 CN 201511001515
(43) Date of publication of application: 05.07.2017
(73) Proprietor: Xiaomi Inc., Beijing 100085 (CN)
(72) Inventor: QIU, Zifeng, Haidian District, Beijing 100085 (CN); MA, Jiping, Haidian District, Beijing 100085 (CN); HUANG, Qiwu, Haidian District, Beijing 100085 (CN)
(74) Representative: Kudlek, Franz Thomas

(56) References cited:
- EP-A1- 2 945 058
- WO-A2-2005/006130
- CN-A- 104 375 839
- CN-A- 104 869 617

## Description

### TECHNICAL FIELD

The embodiments of present disclosure generally relate to the technical field of computers, and more particularly, to an application management method and device, a computer program and a recording medium readable by a computer.

### BACKGROUND

Along with rapid development of a computer technology, terminals such as a mobile phone have spread to all corners of the world, and more and more applications have also been correspondingly developed and used.

After a terminal receives a certain message (such as an advertisement message) sent by a server through a locally installed application, the terminal may display a message notice corresponding to the message to prompt a user to click and view.

In a process of implementing the present disclosure, the inventor finds that there is at least the following problem in related arts:
a terminal frequently receives messages of applications and displays corresponding message notices, which may cause high power consumption of the terminal. WO 2005/006130 A2 discloses that, when a message is received, notification messages corresponding to other incoming messages will not be displayed if there is not user hover or drill down the current incoming message. CN 104869617A1 discloses a terminal control method.

### SUMMARY

The invention is set out in the appended set of claims.

Accordingly, the embodiments of the present disclosure provide an application management method and device, in accordance with claims which follow.

According to a first aspect of the present disclosure, an application management method including the features of claim 1 is provided.

According to a second aspect of the present disclosure, an application management device is provided in claim 6.

It is to be understood that both the foregoing general description and the following detailed description are exemplary and explanatory only and are not restrictive of the embodiment of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of embodiments of the present disclosure. In the drawings:
Fig. 1 is a flow chart showing an application management method, according to an exemplary embodiment;
Fig. 2 is a flow chart showing application management, according to an exemplary embodiment;
Fig. 3 is a schematic diagram of an application management device, according to an exemplary embodiment;
Fig. 4 is a schematic diagram of an application management device, according to an exemplary embodiment;
Fig. 5 is a schematic diagram of an application management device, according to an exemplary embodiment; and
Fig. 6 is a structure diagram of a terminal, according to an exemplary embodiment.

The specific embodiments of the disclosure are shown through the above accompanying drawings, and more detailed description will be given hereinafter. These accompanying drawings and text description do not limit the scope of conception of the disclosure in any way, but illustrate concepts of the disclosure for the skilled personnel in the field by referring to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

An exemplary embodiment of the present disclosure provides an application management method, which may be adopted for a terminal, wherein the terminal may be any mobile terminal installed with an application, such as a mobile phone and a tablet computer. A processor, a memory, a screen, an input unit and a communication part may be arranged in the terminal, the processor may be configured to process a process of managing the application, the memory may be configured to store required data and generated data in the processing process, the screen may be configured to display a content required to be displayed to a user in the processing process, such as a message of the application, the input unit may be configured for the user to input an instruction to the terminal or set information, such as a keyboard and a Microphone (MIC), and the communication part may be configured to receive or send data involved in the processing process, such as a BlueTooth (BT) part and an antenna. In the embodiment, the solution will be described with the condition that the terminal is a mobile phone as an example in detail, and other conditions are similar, and will not be elaborated in the embodiment.

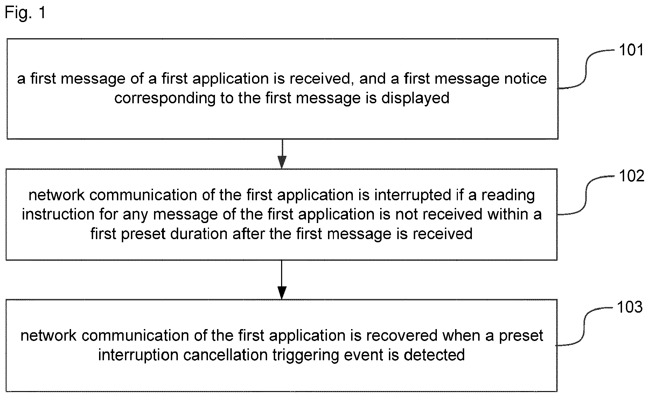

A processing flow shown in Fig. 1 will be described below with reference to an implementation mode in detail, and may include contents as follows.

Step 101: a first message of a first application is received, and a first message notice corresponding to the first message is displayed.

During implementation, a user may install various applications on a terminal, and most of the applications may often send some messages to a system of the terminal. After receiving a message of a certain application, i.e. the first message of the first application, the terminal may directly display the first message in a screen or generate the first message notice corresponding to the first message and display the first message notice.

Step 102: network communication of the first application is interrupted if a reading instruction for any message of the first application is not received within a first preset duration after the first message is received.

During implementation, the terminal may start timing and monitor the reading instruction of the user for any message of the first application after receiving the first message. If the terminal does not receive the reading instruction for any message of the first application within the first preset duration, it may be considered that the message of the first application is currently not required to be timely acquired, so that network communication of the first application may be interrupted, and the first application enters an off state and does not receive any message. For example, after receiving a chat message from MiTalk, the terminal displays a message notice of the chat message, and if the user does not click any message of MiTalk within 5 minutes, including the chat message, a push message and news, network communication of MiTalk is interrupted.

Step 103: network communication of the first application is recovered when a preset interruption cancellation triggering event is detected.

During implementation, after network communication of the first application is interrupted, the terminal may monitor whether the preset interruption cancellation triggering event happens or not in real time. If occurrence of the preset interruption cancellation triggering event is detected, network communication of the first application may be recovered, and the first application may further continue receiving messages.

Optionally, it may be set that the application is controlled to be connected to a network only after the terminal enters a standby state, and correspondingly, processing of Step 102 may be implemented as follows: network communication of the first application is interrupted if the terminal is in the standby state when receiving the first message and if the reading instruction for any message of the first application is not received within the first preset duration after the first message is received.

During implementation, the terminal acquires a notice about an on/off state of the screen from a system log service process, and whether the terminal is in the standby state or not is further determined according to the on/off state of the screen. Processing in Step 102 is triggered if the screen is in the off state when the terminal receives the first message, and the network connection of the first application is not controlled if the screen is in the on state when the terminal receives the first message.

Optionally, the preset interruption cancellation triggering event in Step 103 may be diversified, and two feasible interruption cancellation triggering events are given below.

Solution 1: network communication of the first application is recovered after the reading instruction for any message of the first application is received.

During implementation, after the terminal interrupts a network connection of the first application, if the user clicks to read a certain message of the first application or enters any interface of the first application, the terminal may receive the reading instruction about the first application, and may further recover network communication of the first application.

Solution 2: network communication of the first application is recovered after a second preset duration elapses after network communication of the first application is interrupted.

During implementation, the terminal may preset triggering time for recovery of network communication, that is, the terminal automatically recovers network communication of the first application after the second preset duration elapses after interrupting the network connection of the first application. Based on the example in Step 102, it may be set here that the terminal automatically recovers network communication of MiTalk after network communication of MiTalk is interrupted for 15 minutes.

Optionally, after network communication is recovered, the network connection of the application may be interrupted again after an interruption triggering event is met, and corresponding processing may be implemented as follows: network communication of the first application is interrupted again if a reading instruction for any message of the first application is not received within a third preset duration after network communication of the first application is recovered.

During implementation, timing may be started after network communication of the first application is recovered, and if the reading instruction of the user for any message of the first application is still not received within the third preset duration, network communication of the first application may be interrupted again. For example, whether the user clicks and reads a related message of MiTalk within 5 minutes after network communication of MiTalk is recovered or not may be detected, and if a reading instruction about MiTalk is not received within 5 minutes, network communication of MiTalk may be interrupted again.

Optionally, a disconnected state may be kept for a longer time when the network connection of the application is interrupted again, and corresponding processing may be implemented as follows: network communication of the first application is recovered after a fourth preset duration elapses after network communication of the first application is interrupted again, wherein the fourth preset duration is more than or equal to the second preset duration.

During implementation, the terminal may preset triggering time for secondary recovery of network communication, that is, it may be set that network communication of the first application is recovered after the fourth preset duration elapses after the terminal interrupts network communication of the first application again, wherein the fourth preset duration may be set to be more than or equal to the second preset duration. Based on the abovementioned example, MiTalk is disconnected again, and it may be set that network communication of MiTalk is recovered after 30 minutes.

It is important to note that the whole application management flow may be implemented as follows:
the terminal may keep network communication of the first application within a first preset network connection duration after receiving the first message of the first application, interrupt network communication of the first application within a first preset network disconnection duration, recover and keep network communication of the first application for a second preset network connection duration and continue interrupting network communication of the first application for a second preset network disconnection duration, subsequent processing is executed in the same manner, it may be set that the network disconnection durations are kept unchanged or progressively increased and the network connection durations are kept unchanged or progressively decreased, and when a certain network disconnection duration reaches a preset maximum or a certain network connection duration reaches a preset minimum, the terminal may stop the application management flow and is recovered to a state before the first message is received, and may also continue the flow and keep the network disconnection duration be the maximum or keep the network connection duration be the minimum. In addition, it may also be set that the terminal stops the application management flow and is recovered to the state before the first message is received when the terminal receives the reading instruction for any message of the first application.

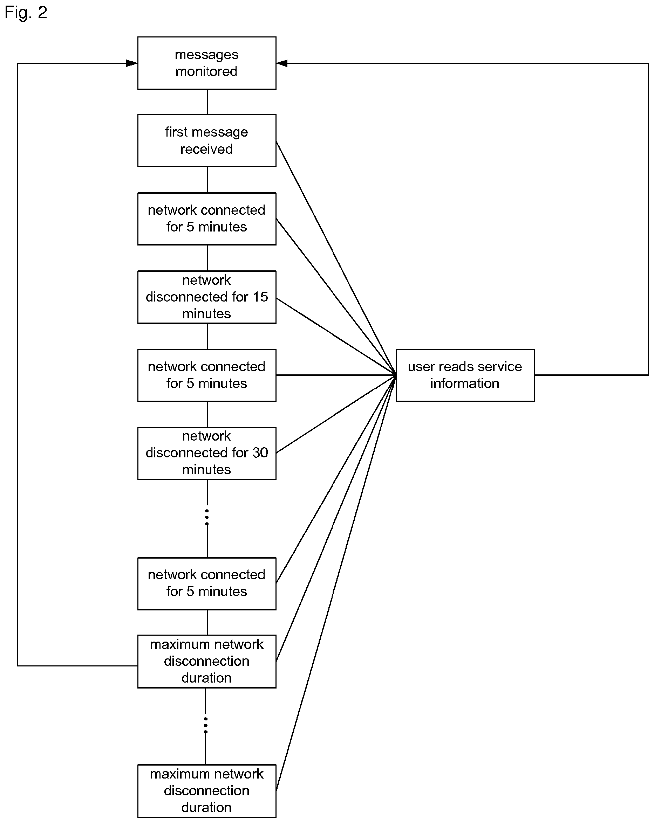

MiTalk is taken as an example, and the other conditions are similar and will not be elaborated:
the terminal may set a network connection time of 5 minutes after receiving a MiTalk message, may interrupt the network connection of MiTalk for 15 minutes if the user does not read any message of MiTalk within 5 minutes, sets a network connection time of 5 minutes again, may interrupt the network connection of MiTalk for 30 minutes if the user still does not read any message of MiTalk within 5 minutes, and performs processing in the same manner of keeping the network connection for 5 minutes and then interrupting the network connection, the network disconnection duration is progressively increased until reaching a preset maximum duration. In addition, in the flow, if the user clicks a MiTalk message, the flow is re-executed from an initial link. Or, after the network disconnection duration reaches the maximum duration, the flow is also re-executed from the initial link, wherein each network connection time may also be correspondingly regulated according to a specific scenario. Fig. 2 shows an optional processing flow.

Applications are classified, and when network communication of a certain application is interrupted, other application of the same type is simultaneously interrupted, and corresponding processing is implemented as follows: a first application type of the first application is determined; and network communication of the first application and network communication of other application of the first application type is interrupted if the reading instruction for any message of the first application and a reading instruction for any message of said other application of the first application type are not received within the first preset duration after the first message is received.

During implementation, the terminal may classify locally installed applications, and for example, may specifically classify the applications into a chat type, a shopping type, a video type and a game type. If the terminal receives a message of a certain application, i.e. the first message, and does not receive a reading instruction of the user for any other message corresponding to applications of this type within the first preset duration, network communication of all the locally installed applications of this application type may be interrupted. For example, based on the example of MiTalk, MiTalk may be divided into a chat type application, chat type applications may further include applications such as WeChat, Momo and Fetion, and the terminal may detect whether a reading instruction for any message of the chat type applications or not within next 5 minutes, and may interrupt network communication of all the locally installed chat type applications if not receiving the reading instruction for any message of the chat type applications within 5 minutes.

In the embodiment of the present disclosure, the first message of the first application is received, the first message notice corresponding to the first message is displayed, network communication of the first application is interrupted if the reading instruction for any message of the first application is not received within the first preset duration after the first message is received, and network communication of the first application is recovered when the preset interruption cancellation triggering event is detected. In such a manner, when the user is not required to read a message of a certain application, the terminal may interrupt network communication of the application, prevent reception of the message of the application and further prevent display of a corresponding message notice, so that power of the terminal may be saved.

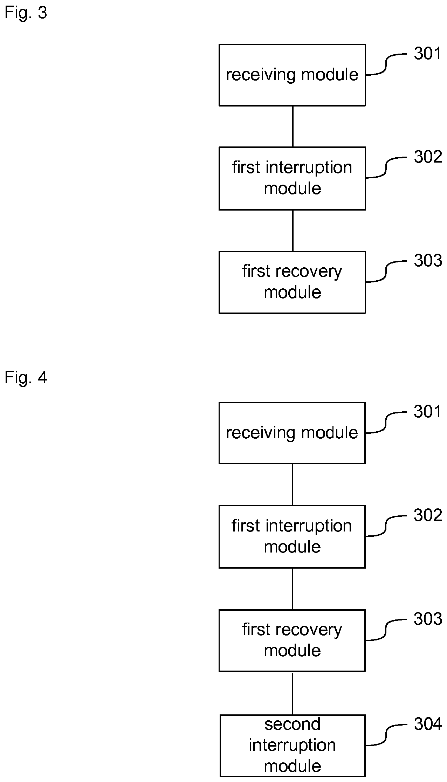

Based on the same technical concept, another exemplary embodiment of the present disclosure provides an application management device, and as shown in Fig. 3, the device includes:
a receiving module 301, configured to receive a first message of a first application, and display a first message notice corresponding to the first message;
a first interruption module 302, configured to interrupt network communication of the first application if a reading instruction for any message of the first application is not received within a first preset duration after the first message is received; and
a first recovery module 303, configured to recover network communication of the first application when a preset interruption cancellation triggering event is detected.

The first interruption module 302 is configured to:
interrupt network communication of the first application if a terminal is in a standby state when receiving the first message and if the reading instruction for any message of the first application is not received within the first preset duration after the first message is received.

Optionally, the first recovery module 303 is configured to:
recover network communication of the first application after the reading instruction for any message of the first application is received.

Optionally, the first recovery module 303 is configured to:
recover network communication of the first application after a second preset duration elapses after network communication of the first application is interrupted.

Optionally, as shown in Fig. 4, the device further includes:
a second interruption module 304, configured to interrupt network communication of the first application again if a reading instruction for any message of the first application is not received within a third preset duration after network communication of the first application is recovered.

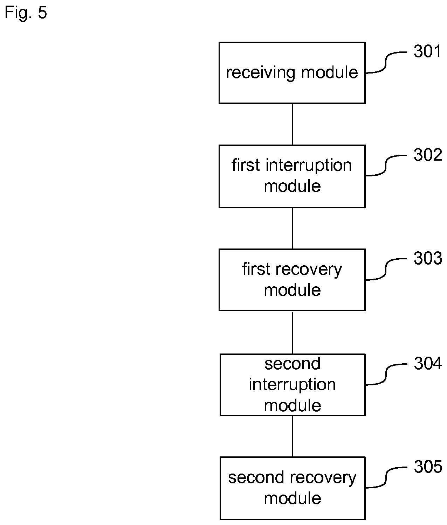

Optionally, as shown in Fig. 5, the device further includes:
a second recovery module 305, configured to recover network communication of the first application after a fourth preset duration elapses after network communication of the first application is interrupted again, wherein the fourth preset duration may be more than or equal to the second preset duration.

The first interruption module 302 is configured to:
determine a first application type of the first application; and
interrupt network communication of the first application and network communication of other application of the first application type if the reading instruction for any message of the first application and a reading instruction for any message of said other application of the first application type are not received within the first preset duration after the first message is received.

With respect to the devices in the above embodiments, the specific manners for performing operations for individual modules therein have been described in detail in the embodiments regarding the methods, which will not be elaborated herein.

In the embodiment of the present disclosure, the first message of the first application is received, the first message notice corresponding to the first message is displayed, network communication of the first application is interrupted if the reading instruction for any message of the first application is not received within the first preset duration after the first message is received, and network communication of the first application is recovered when the preset interruption cancellation triggering event is detected. In such a manner, when the user is not required to read a message of a certain application, the terminal may interrupt network communication of the application, prevent reception of the message of the application and further prevent display of a corresponding message notice, so that power of the terminal may be saved.

It is important to note that: during application management of the application management device provided by the embodiment, descriptions are made only with division of each function module as an example, and during a practical application, functions may be allocated to different function modules for realization according to a requirement, that is, an internal structure of the device is divided into different function modules to realize all or part of the abovementioned functions. In addition, the application management device provided by the embodiment belongs to the same concept as the application management method embodiment, and details about its specific implementation process refer to the method embodiment, and will not be elaborated herein.

Another exemplary embodiment of the present disclosure provides a structure diagram of a terminal. The terminal may be a mobile phone and the like.

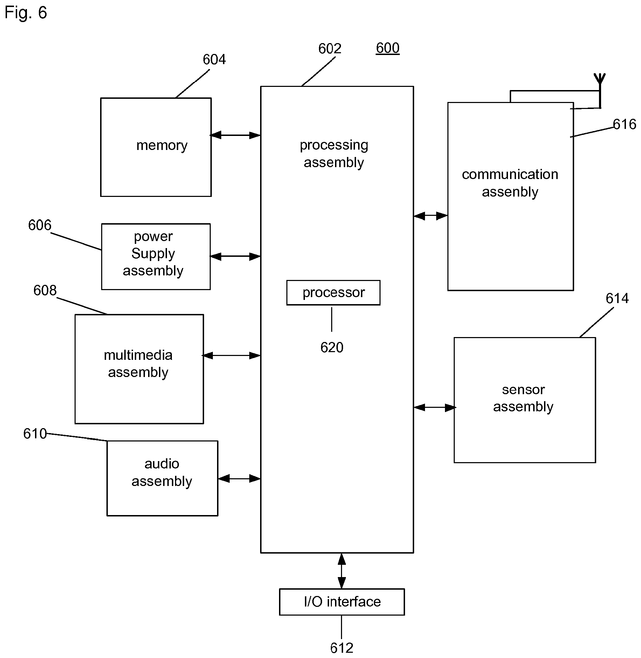

Referring to Fig. 6, the terminal 600 may include one or more of the following assemblies: a processing assembly 602, a memory 604, a power supply assembly 606, a multimedia assembly 608, an audio assembly 610, an Input/Output (I/O) interface 612, a sensor assembly 614, and a communication assembly 616.

The processing assembly 602 typically controls overall operations of the terminal 600, such as the operations associated with display, telephone calls, data communications, camera operations, and recording operations. The processing assembly 602 may include one or more processors 620 to execute instructions to perform all or part of the steps in the abovementioned method. Moreover, the processing assembly 602 may include one or more modules which facilitate interaction between the processing assembly 602 and the other assemblies. For instance, the processing assembly 602 may include a multimedia module to facilitate interaction between the multimedia assembly 608 and the processing assembly 602.

The memory 604 is configured to store various types of data to support the operation of the terminal 600. Examples of such data include instructions for any applications or methods operated on the terminal 600, contact data, phonebook data, messages, pictures, video, etc. The memory 604 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power supply assembly 606 provides power for various assemblies of the terminal 600. The power supply supply assembly 606 may include a power management system, one or more power supplies, and other assemblies associated with the generation, management and distribution of power for the terminal 600.

The multimedia assembly 608 includes a screen providing an output interface between the terminal 600 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia assembly 608 includes a front camera and/or a rear camera. The front camera and/or the rear camera may receive external multimedia data when the terminal 600 is in an operation mode, such as a photographing mode or a video mode. Each of the front camera and the rear camera may be a fixed optical lens system or have focusing and optical zooming capabilities.

The audio assembly 610 is configured to output and/or input an audio signal. For example, the audio assembly 610 includes a MIC, and the MIC is configured to receive an external audio signal when the terminal 600 is in the operation mode, such as a call mode, a recording mode and a voice recognition mode. The received audio signal may be further stored in the memory 604 or sent through the communication assembly 616.

The I/O interface 612 provides an interface between the processing assembly 602 and a peripheral interface module, and the peripheral interface module may be a keyboard, a click wheel, a button and the like. The button may include, but not limited to: a home button, a volume button, a starting button and a locking button.

The sensor assembly 614 includes one or more sensors configured to provide status assessment in various aspects for the terminal 600. For instance, the sensor assembly 614 may detect an on/off status of the terminal 600 and relative positioning of assemblies, such as a display and small keyboard of the terminal 600, and the sensor assembly 614 may further detect a change in a position of the terminal 600 or an assembly of the terminal 600, presence or absence of contact between the user and the terminal 600, orientation or acceleration/deceleration of the terminal 600 and a change in temperature of the terminal 600. The sensor assembly 614 may include a proximity sensor configured to detect presence of an object nearby without any physical contact. The sensor assembly 614 may also include a light sensor, such as a Complementary Metal Oxide Semiconductor (CMOS) or Charge Coupled Device (CCD) image sensor, configured for use in an imaging application. In some embodiments, the sensor assembly 614 may also include an acceleration sensor, a gyroscope sensor, a magnetic sensor, a pressure sensor or a temperature sensor.

The communication assembly 616 is configured to facilitate wired or wireless communication between the terminal 600 and another device. The terminal 600 may access a communication-standard-based wireless network, such as a Wireless Fidelity (WiFi) network, a 2nd-Generation (2G) or 3rd-Generation (3G) network or a combination thereof. In an exemplary embodiment, the communication assembly 816 receives a broadcast signal or broadcast associated information from an external broadcast management system through a broadcast channel. In an exemplary embodiment, the communication assembly 616 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BT technology and another technology.

In an exemplary embodiment, the terminal 600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic assemblies, and is configured to execute the abovementioned method.

In an exemplary embodiment, there is also provided a non-transitory computer-readable storage medium including an instruction, such as the memory 604 including an instruction, and the instruction may be executed by the processor 620 of the terminal 600 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

According to a non-transitory computer-readable storage medium, an instruction in the storage medium is executed by a processor of a terminal to enable the terminal to execute an application management method, which includes that:
a first message of a first application is received, and a first message notice corresponding to the first message is displayed;
network communication of the first application is interrupted if a reading instruction for any message of the first application is not received within a first preset duration after the first message is received; and
network communication of the first application is recovered when a preset interruption cancellation triggering event is detected.

The step that network communication of the first application is interrupted if the reading instruction for any message of the first application is not received within the first preset duration after the first message is received includes that:
network communication of the first application is interrupted if the terminal is in a standby state when receiving the first message and if the reading instruction for any message of the first application is not received within the first preset duration after the first message is received.

Optionally, the step that network communication of the first application is recovered when the preset interruption cancellation triggering event is detected includes that:
network communication of the first application is recovered after the reading instruction for any message of the first application is received.

Optionally, network communication of the first application is recovered when the preset interruption cancellation triggering event is detected includes that:
network communication of the first application is recovered after a second preset duration elapses after network communication of the first application is interrupted.

Optionally, the method further includes that:
network communication of the first application is interrupted again if a reading instruction for any message of the first application is not received within a third preset duration after network communication of the first application is recovered.

Optionally, the method further includes that:
network communication of the first application is recovered after a fourth preset duration elapses after network communication of the first application is interrupted again, wherein the fourth preset duration may be more than or equal to the second preset duration.

The step that network communication of the first application is interrupted if the reading instruction for any message of the first application is not received within the first preset duration after the first message is received includes that:
a first application type of the first application is determined; and
network communication of the first application and network communication of other application of the first application type is interrupted if the reading instruction for any message of the first application and a reading instruction for any message of said other application of the first application type are not received within the first preset duration after the first message is received.

In the embodiment of the present disclosure, the first message of the first application is received, the first message notice corresponding to the first message is displayed, network communication of the first application is interrupted if the reading instruction for any message of the first application is not received within the first preset duration after the first message is received, and network communication of the first application is recovered when the preset interruption cancellation triggering event is detected. In such a manner, when the user is not required to read a message of a certain application, the terminal may interrupt network communication of the application, prevent reception of the message of the application and further prevent display of a corresponding message notice, so that power of the terminal may be saved.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It is intended that the scope of the disclosure only be limited by the appended claims.

### INDUSTRIAL APPLICABILITY

In the embodiments of the present disclosure, the first message of the first application is received, the first message notice corresponding to the first message is displayed, network communication of the first application is interrupted if the reading instruction for any message of the first application is not received within the first preset duration after the first message is received, and network communication of the first application is recovered when the preset interruption cancellation triggering event is detected. In such a manner, when the user is not required to read a message of a certain application, the terminal may interrupt network communication of the application, prevent reception of the message of the application and further prevent display of a corresponding message notice, so that power of the terminal may be saved.

## Claims

1. An application management method,
receiving (101) a first message of a first application on a terminal, and displaying a first message notice corresponding to the first message;
determining a first application type to which the first application belongs and the method **characterized in that**, the method further comprises:
acquiring a notice about an on/off state of a screen of the terminal from a system log service process of the terminal;
determining whether the screen of the terminal is in the on state or in the off state when receiving the first message of the first application based on the notice;
interrupting (102) simultaneously network communication of all applications of the first application type if the screen is in the off state when receiving the first message of the first application and if a reading instruction for any message of the first application and a reading instruction for any message of another application of the first application type are not received within a first preset duration after the first message is received, wherein the reading instruction for any message of the first application refers to that a user clicks to read a message of the first application or enters any interface of the first application; and
recovering (103) network communication of the first application when a preset interruption cancellation triggering event is detected.

2. The method according to claim 1, wherein recovering network communication of the first application when the preset interruption cancellation triggering event is detected comprises:
recovering network communication of the first application after the reading instruction for any message of the first application is received.

3. The method according to claim 1, wherein recovering network communication of the first application when the preset interruption cancellation triggering event is detected comprises:
recovering network communication of the first application after a second preset duration elapses after network communication of the first application is interrupted.

4. The method according to claim 3, further comprising:
interrupting network communication of the first application again if the reading instruction for any message of the first application is not received within a third preset duration after network communication of the first application is recovered.

5. The method according to claim 4, further comprising:
recovering network communication of the first application after a fourth preset duration elapses after network communication of the first application is interrupted again, wherein the fourth preset duration is more than or equal to the second preset duration.

6. An application management device, comprising:
a processor; and
a memory for storing instructions executable by the processor,
wherein the processor is configured to:
receive a first message of a first application on a terminal, and display a first message notice corresponding to the first message;
determine a first application type to which the first application belongs, the processor **characterised by** been configured further to:
acquire a notice about an on/off state of a screen of the terminal from a system log service process of the terminal;
determine whether the screen of the terminal is in the on state or in the off state when receiving the first message of the first application based on the notice;
interrupt simultaneously network communication of all applications of the first application type if the screen is in the off state when receiving the first message of the first application and if a reading instruction for any message of the first application and a reading instruction for any message of another application of the first application type are not received within a first preset duration after the first message is received, wherein the reading instruction for any message of the first application refers to that a user clicks to read a message of the first application or enters any interface of the first application; and
recover network communication of the first application when a preset interruption cancellation triggering event is detected.

7. The device according to claim 6, wherein the processor is specifically configured to:
recover network communication of the first application after the reading instruction for any message of the first application is received.

8. The device according to claim 6, wherein the processor is specifically configured to:
recover network communication of the first application after a second preset duration elapses after network communication of the first application is interrupted.

9. The device according to claim 8, wherein the processor is further configured to:
interrupt network communication of the first application again if the reading instruction for any message of the first application is not received within a third preset duration after network communication of the first application is recovered.

10. The device according to claim 9, wherein the processor is further configured to:
recover network communication of the first application after a fourth preset duration elapses after network communication of the first application is interrupted again, wherein the fourth preset duration is more than or equal to the second preset duration.

11. A computer program including instructions for executing the steps of an application management method according to any one of claims 1 to 5 when said program is executed by a computer.

12. A recording medium readable by a computer and having recorded thereon a computer program including instructions for executing the steps of an application management method according to any one of claims 1 to 5.

## Patentansprüche

1. Verfahren zur Verwaltung von Anwendungen,
umfassend Empfangen (101) einer ersten Nachricht einer ersten Anwendung auf einem Terminal und Anzeigen eines ersten Nachrichtenhinweises, der der ersten Nachricht entspricht;
Bestimmen eines ersten Anwendungstyps, zu dem die erste Anwendung gehört, und wobei das Verfahren **dadurch gekennzeichnet ist, dass** das Verfahren ferner umfasst:
eine Benachrichtigung über einen Ein-/Aus-Zustand eines Bildschirms des Terminals von einem Systemprotokoll-Dienstprozess des Terminals zu erhalten;
Bestimmen, ob der Bildschirm des Terminals im eingeschalteten Zustand oder im ausgeschalteten Zustand ist, wenn die erste Nachricht der ersten Anwendung empfangen wird, basierend auf dem Hinweis;
gleichzeitiges Unterbrechen (102) der Netzwerkkommunikation aller Anwendungen des ersten Anwendungstyps, wenn sich der Bildschirm beim Empfang der ersten Nachricht der ersten Anwendung im ausgeschalteten Zustand befindet und wenn eine Leseanweisung für eine beliebige Nachricht der ersten Anwendung und eine Leseanweisung für eine beliebige Nachricht einer anderen Anwendung des ersten Anwendungstyps nicht innerhalb einer ersten voreingestellten Dauer nach dem Empfang der ersten Nachricht empfangen werden, wobei sich die Leseanweisung für eine beliebige Nachricht der ersten Anwendung darauf bezieht, dass ein Benutzer klickt, um eine Nachricht der ersten Anwendung zu lesen, oder eine Schnittstelle der ersten Anwendung betritt; und
Wiederherstellung (103) der Netzkommunikation der ersten Anwendung, wenn ein voreingestelltes, die Unterbrechung auslösendes Ereignis erkannt wird.

2. Verfahren nach Anspruch 1, wobei die Wiederherstellung der Netzwerkkommunikation der ersten Anwendung, wenn das voreingestellte Unterbrechungsaufhebungs-Auslöseereignis erkannt wird, umfasst:
Wiederherstellung der Netzkommunikation der ersten Anwendung, nachdem die Leseanweisung für eine beliebige Nachricht der ersten Anwendung empfangen wurde.

3. Verfahren nach Anspruch 1, wobei die Wiederherstellung der Netzwerkkommunikation der ersten Anwendung, wenn das voreingestellte Unterbrechungsaufhebungs-Auslöseereignis erkannt wird, umfasst:
Wiederherstellung der Netzkommunikation der ersten Anwendung nach Ablauf einer zweiten voreingestellten Dauer, nachdem die Netzkommunikation der ersten Anwendung unterbrochen wurde.

4. Das Verfahren nach Anspruch 3 ferner umfassend:
erneutes Unterbrechen der Netzkommunikation der ersten Anwendung, wenn der Lesebefehl für eine beliebige Nachricht der ersten Anwendung nicht innerhalb einer dritten voreingestellten Dauer nach Wiederherstellung der Netzkommunikation der ersten Anwendung empfangen wird.

5. Das Verfahren nach Anspruch 4 ferner umfassend:
Wiederherstellung der Netzkommunikation der ersten Anwendung nach Ablauf einer vierten voreingestellten Dauer, nachdem die Netzkommunikation der ersten Anwendung erneut unterbrochen wurde, wobei die vierte voreingestellte Dauer größer oder gleich der zweiten voreingestellten Dauer ist.

6. Eine Vorrichtung zur Verwaltung von Anwendungen, die Folgendes umfasst:
einen Prozessor; und
einen Speicher zum Speichern von Anweisungen, die vom Prozessor ausgeführt werden können,
wobei der Prozessor so konfiguriert ist, dass er:
eine erste Nachricht einer ersten Anwendung auf einem Terminalempfangen und eine erste Nachrichtenmeldung anzeigen, die der ersten Nachricht entspricht;
einen ersten Anwendungstyp bestimmt, zu dem die erste Anwendung gehört, wobei der Prozessor **dadurch gekennzeichnet ist, dass** er ferner konfiguriert ist, um:
eine Mitteilung über den Ein-/Aus-Zustand eines Bildschirms des Terminals von einem Systemprotokolldienstprozess des Terminals zu erhalten;
zu bestimmen, ob sich der Bildschirm des Terminals im eingeschalteten Zustand oder im ausgeschalteten Zustand befindet, wenn die erste Nachricht der ersten Anwendung empfangen wird, basierend auf dem Hinweis;
eine gleichzeitige Unterbrechung der Netzwerkkommunikation aller Anwendungen des ersten Anwendungstyps zu bewirken, wenn sich der Bildschirm im ausgeschalteten Zustand befindet, wenn die erste Nachricht der ersten Anwendung empfangen wird und wenn eine Leseanweisung für eine beliebige Nachricht der ersten Anwendung und eine Leseanweisung für eine beliebige Nachricht einer anderen Anwendung des ersten Anwendungstyps nicht innerhalb einer ersten voreingestellten Dauer nach dem Empfang der ersten Nachricht empfangen werden, wobei sich die Leseanweisung für eine beliebige Nachricht der ersten Anwendung darauf bezieht, dass ein Benutzer klickt, um eine Nachricht der ersten Anwendung zu lesen, oder eine beliebige Schnittstelle der ersten Anwendung betritt; und
die Netzkommunikation der ersten Anwendung wiederherzustellen, wenn ein voreingestelltes, die Unterbrechung auslösendes Ereignis erkannt wird.

7. Vorrichtung nach Anspruch 6, wobei der Prozessor speziell konfiguriert ist, um:
die Netzkommunikation der ersten Anwendung wiederherzustellen, nachdem die Leseanweisung für eine beliebige Nachricht der ersten Anwendung empfangen wurde.

8. Vorrichtung nach Anspruch 6, wobei der Prozessor speziell konfiguriert ist, um:
die Netzkommunikation der ersten Anwendung wiederherzustellen, nachdem eine zweite voreingestellte Dauer nach Unterbrechung der Netzkommunikation der ersten Anwendung verstrichen ist.

9. Vorrichtung nach Anspruch 8, wobei der Prozessor ferner so konfiguriert ist, dass er:
die Netzkommunikation der ersten Anwendung erneut unterbricht, wenn der Lesebefehl für eine beliebige Nachricht der ersten Anwendung nicht innerhalb einer dritten voreingestellten Dauer nach Wiederherstellung der Netzkommunikation der ersten Anwendung empfangen wird.

10. Vorrichtung nach Anspruch 9, wobei der Prozessor ferner so konfiguriert ist, dass er:
die Netzkommunikation der ersten Anwendung wiederherstellt, nachdem eine vierte voreingestellte Dauer verstrichen ist, nachdem die Netzkommunikation der ersten Anwendung erneut unterbrochen wurde, wobei die vierte voreingestellte Dauer größer oder gleich der zweiten voreingestellten Dauer ist.

11. Computerprogramm mit Befehlen zum Ausführen der Schritte eines Anwendungsmanagementverfahrens nach einem der Ansprüche 1 bis 5, wenn das Programm von einem Computer ausgeführt wird.

12. Aufzeichnungsmedium, das von einem Computer lesbar ist und auf dem ein Computerprogramm aufgezeichnet ist, das Anweisungen zum Ausführen der Schritte eines Anwendungsverwaltungsverfahrens nach einem der Ansprüche 1 bis 5 enthält.

## Revendications

1. Une méthode de gestion des applications, comportant
réception (101) d'un premier message d'une première application sur un terminal, et affichage d'un premier avis de message correspondant au premier message ;
déterminer un premier type d'application auquel appartient la première application et la méthode est **caractérisé en ce qu'**elle comprend en outre :
l'acquisition d'un avis sur l'état activé/désactivé d'un écran du terminal à partir d'un processus de service de journal du système du terminal ;
déterminer si l'écran du terminal est activé ou désactivé lors de la réception du premier message de la première application en fonction de l'avis ;
interrompre (102) simultanément la communication réseau de toutes les applications du premier type d'application si l'écran est désactivé lors de la réception du premier message de la première application et si une instruction de lecture d'un message de la première application et une instruction de lecture d'un message d'une autre application du premier type d'application ne sont pas reçues dans un premier délai prédéfini après la réception du premier message, l'instruction de lecture d'un message de la première application signifiant qu'un utilisateur clique pour lire un message de la première application ou entre dans une interface de la première application ; et
rétablir (103) la communication réseau de la première application lorsqu'un événement déclencheur d'annulation d'interruption prédéfini est détecté.

2. La méthode selon la revendication 1, dans laquelle le rétablissement de la communication réseau de la première application lorsque l'événement déclencheur de l'annulation de l'interruption prédéfinie est détecté comprend :
rétablir la communication réseau de la première application après réception de l'instruction de lecture d'un message quelconque de la première application.

3. La méthode selon la revendication 1, dans laquelle le rétablissement de la communication réseau de la première application lorsque l'événement déclencheur de l'annulation de l'interruption prédéfinie est détecté comprend :
rétablir la communication réseau de la première application après l'écoulement d'une deuxième durée prédéfinie après l'interruption de la communication réseau de la première application.

4. La méthode selon la revendication 3, comprenant en outre :
interrompre à nouveau la communication réseau de la première application si l'instruction de lecture d'un message quelconque de la première application n'est pas reçue dans un troisième délai prédéfini après le rétablissement de la communication réseau de la première application.

5. La méthode selon la revendication 4, comprenant en outre :
rétablir la communication réseau de la première application après l'écoulement d'une quatrième durée prédéfinie après que la communication réseau de la première application a été à nouveau interrompue, la quatrième durée prédéfinie étant supérieure ou égale à la deuxième durée prédéfinie.

6. Un appareil de gestion d'application, comprenant :
un processeur ; et
une mémoire pour stocker des instructions exécutables par le processeur,
dans lequel le processeur est configuré pour :
recevoir un premier message d'une première application sur un terminal, et afficher un premier avis de message correspondant au premier message ;
déterminer un premier type d'application auquel appartient la première application , le processeur étant **caractérisé par le fait qu'**il est configuré en outre pour :
acquérir un avis sur l'état activé/désactivé d'un écran du terminal à partir d'un processus de service de journal du système du terminal ;
déterminer si l'écran du terminal est activé ou désactivé lors de la réception du premier message de la première application en fonction de l'avis ;
interrompre simultanément la communication réseau de toutes les applications du premier type d'application si l'écran est dans l'état désactivé lors de la réception du premier message de la première application et si une instruction de lecture d'un message de la première application et une instruction de lecture d'un message d'une autre application du premier type d'application ne sont pas reçues dans une première durée prédéfinie après la réception du premier message, l'instruction de lecture d'un message de la première application signifiant qu'un utilisateur clique pour lire un message de la première application ou entre dans une interface quelconque de la première application ; et
rétablir la communication réseau de la première application lorsqu'un événement déclencheur d'annulation d'interruption prédéfini est détecté.

7. L'appareil selon la revendication 6, dans lequel le processeur est spécifiquement configuré pour :
rétablir la communication réseau de la première application après réception de l'instruction de lecture d'un message quelconque de la première application.

8. L'appareil selon la revendication 6, dans lequel le processeur est spécifiquement configuré pour :
rétablir la communication réseau de la première application après l'écoulement d'une deuxième durée prédéfinie après l'interruption de la communication réseau de la première application.

9. L'appareil selon la revendication 8, dans lequel le processeur est en outre configuré pour :
interrompre à nouveau la communication réseau de la première application si l'instruction de lecture d'un message quelconque de la première application n'est pas reçue dans un troisième délai prédéfini après le rétablissement de la communication réseau de la première application.

10. L'appareil selon la revendication 9, dans lequel le processeur est en outre configuré pour :
rétablir la communication réseau de la première application après l'écoulement d'une quatrième durée prédéfinie après que la communication réseau de la première application a été à nouveau interrompue, la quatrième durée prédéfinie étant supérieure ou égale à la deuxième durée prédéfinie.

11. Programme d'ordinateur comprenant des instructions pour l'exécution des étapes d'une méthode de gestion d'application selon l'une des revendications 1 à 5 lorsque ledit programme est exécuté par un ordinateur.

12. Support d'enregistrement lisible par un ordinateur et sur lequel est enregistré un programme d'ordinateur comprenant des instructions pour l'exécution des étapes d'une méthode de gestion d'application selon l'une des revendications 1 à 5.
